# EUROPÄISCHE PATENTSCHRIFT

(11) **EP 0 434 606 B1**
(45) Veröffentlichungstag und Bekanntmachung des Hinweises auf die Patenterteilung: **16.08.1995**
(21) Anmeldenummer: 90810896.2
(22) Anmeldetag: 20.11.1990
(51) Int. Cl.: C07F 9/40

(54) **Hydroxybenzylphosphonate und Verfahren zu ihrer Herstellung**
Hydroxybenzylphosphonates and their preparation process
Hydroxybenzylphosphonates et leur procédé de préparation

(30) Priorität: 29.11.1989 CH 4271/89
(43) Veröffentlichungstag der Anmeldung: 26.06.1991
(73) Patentinhaber: CIBA-GEIGY AG, 4002 Basel (CH)
(72) Erfinder: Dubs, Paul Dr., CH-1723 Marly (CH); Stegmann, Werner, Dr., CH-4410 Liestal (CH); Luisoli, Reto, CH-4434 Hölstein (CH); Martin, Roger, CH-1723 Marly (CH)

(56) Entgegenhaltungen:
- EP-A- 0 002 042
- DE-A- 3 030 365
- US-A- 3 790 648
- US-A- 3 962 377

## Beschreibung

Die vorliegende Erfindung betrifft ein Einstufenverfahren zur Herstellung von alkylsubstituierten Hydroxybenzylphosphonaten sowie einige neue Hydroxybenzylphosphonate.

Die Verwendung von 2,3,5-Trialkyl-4-hydroxybenzyl-phosphonaten und -phosphinaten als Stabilisatoren für organisches Material wird in US-A 3,962,377 beschrieben.

Die Herstellung von alkylsubstituierten Hydroxybenzylphosphonaten durch mehrstufige Verfahren ist bekannt.
So wird ein zweistufiges Verfahren in den GB-A 939,776 und US-A 3,006,945 und 3,281,505 beschrieben, worin in einer ersten Reaktionsstufe ein o,o-disubstituiertes Phenol mit Formaldehyd und HCl zum entsprechenden Benzylchlorid umgesetzt wird, das nach seiner Isolierung in einer zweiten Reaktionsstufe mit einem Trialkylphosphit zum 3,5-Di-alkyl-4-hydroxybenzylphosphonat umgesetzt wird.
Ferner ist aus der US-A 3,268,630 ein Verfahren bekannt, worin in einem ersten Schritt aus der Phenolverbindung der entsprechende Benzylalkohol hergestellt wird, welcher dann durch Reaktion mit Triphenylphosphit und anschliessende Umesterung mit Alkoholen ein 3,5-Dialkyl-4-hydroxybenzylphosphonat ergibt. Weiter sind in den US-A 3,790,648 und 3,787,540 zwei Verfahren zur Herstellung von 3,5-Dialkyl-4-hydroxybenzylphosphonaten beschrieben, wobei im ersten zuerst aus der Phenolverbindung mit Formaldehyd und einem sekundären Amin die Mannichbase hergestellt und dann mit Dialkylphosphit zur Endverbindung umgesetzt wird, während im zweiten Verfahren zuerst aus der Phenolverbindung mit Formaldehyd, Schwefelkohlenstoff und einem sekundären Amin ein Dithiourethan hergestellt wird und anschliessend im zweiten Verfahrensschritt die Umsetzung mit Dialkylphosphit zur Endverbindung erfolgt.
Aus der DE-A-30 30 365 ist ein zweistufiges Verfahren zur Herstellung von Naphthylmethylphosphonaten und Naphthylmethylphosphinaten bekannt. In der ersten Verfahrensstufe wird eine Mannich-Base durch Reaktion eines Naphthols mit Formaldehyd und äquimolaren Mengen eines sekundären Amins hergestellt. In der zweiten Verfahrensstufe wird die so erhaltene Mannich-Base zu dem gewünschten Endprodukt umgesetzt.

Diese Verfahren befriedigen nicht.
Zum einen müssen die Reaktionsprodukte der ersten Stufe isoliert werden, was einen zeitlichen und materiellen Aufwand bedeutet, indem auch die abgetrennten Nebenprodukte entsorgt werden müssen. Zum anderen sind diese Zwischenprodukte, die als Ausgangsmaterialien für die zweite Verfahrensstufe dienen, zum Teil unstabil oder technisch nicht so leicht herstellbar.

Es wurde nun überraschend ein Einstufenverfahren zur Herstellung von Hydroxybenzylphosphonaten gefunden, wodurch die Probleme der Stabilität und Herstellbarkeit der Zwischenprodukte entfallen und der Aufwand vereinfacht wird.

Die vorliegende Erfindung betrifft ein Verfahren zur Herstellung von Verbindungen der allgemeinen Formel I, 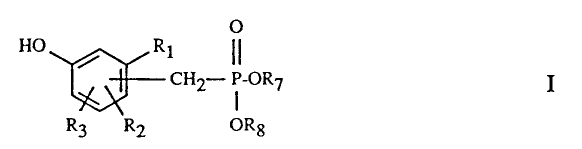
worin R₁ Wasserstoff oder Methyl, R₂ und R₃ unabhängig voneinander C₁-C₁₈-Alkyl, C₅-C₈-Cycloalkyl, Phenyl, C₇-C₉-Phenylalkyl oder Halogen sind, R₂ zusätzlich Wasserstoff ist und R₇ und R₈ unabhängig voneinander C₁-C₁₈-Alkyl, Phenyl oder C₇-C₁₈-Alkylphenyl bedeuten, dadurch gekennzeichnet, dass man in einem Einstufenverfahren ein Phenol der Formel II 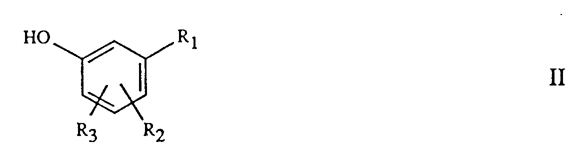
worin R₁ bis R₃ die vorstehend beschriebene Bedeutung haben, mit Formaldehyd oder Paraformaldehyd, einem Amin der Formel III

NR₄R₅R₆ III

worin R₄ C₁-C₄-Alkyl und R₅ und R₆ unabhängig voneinander Wasserstoff oder C₁-C₄-Alkyl bedeuten, und einem Phosphit der Formel IV, 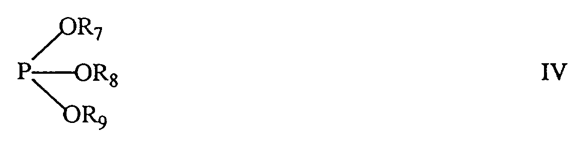
worin R₇ und R₈ die vorstehend beschriebene und R₉ die für R₇ und R₈ angegebene Bedeutung aufweisen, bei einer Temperatur von 0-200°C umsetzt.

Bedeuten R₄, R₅ und R₆ C₁-C₄-Alkyl bzw. R₂, R₃, R₇, R₈ und R₉ C₁-C₁₈-Alkyl, so handelt es sich dabei um geradkettige oder verzweigte Alkylreste wie z.B. Methyl, Ethyl, n-Propyl, Isopropyl, n-Butyl, Isobutyl, sec.-Butyl und tert.-Butyl. R₂, R₃, R₇, R₈ und R₉ können zusätzlich auch geradkettiges oder verzweigtes Pentyl, Hexyl, Heptyl, Octyl, Nonyl, Decyl, Undecyl, Dodecyl, Tridecyl, Tetradecyl, Pentadecyl, Heptadecyl und Octadecyl bedeuten.

Stellen R₂ und R₃ C₅-C₈-Cycloalkyl dar, so handelt es sich beispielsweise um Cyclopentyl, Cyclohexyl, Cycloheptyl oder Cyclooctyl, vorzugsweise um Cyclohexyl.

Stellen R₂ und R₃ C₇-C₉-Phenylalkyl dar, so handelt es sich beispielsweise um Benzyl, 1- oder 2-Phenethyl, 3-Phenylpropyl, α,α-Dimethylbenzyl oder 2-Phenylisopropyl, vorzugsweise jedoch um Benzyl.

Stellen R₂ und R₃ Halogen dar, so handelt es sich z.B. um Fluor, Chlor, Brom oder Jod, vorzugsweise um Chlor.

Stellen R₇, R₈ und R₉ C₇-C₁₈-Alkylphenyl dar, so handelt es sich z.B. um durch ein oder mehrere, vorzugsweise 1 bis 3, insbesondere 1 oder 2, C₁-C₁₂-Alkylgruppen substituiertes Phenyl, bevorzugt jedoch um einfach alkylsubstituiertes Phenyl; bei C₁-C₁₂-Alkyl handelt es sich beispielsweise um Methyl, Ethyl, n-Propyl, Isopropyl, n-Butyl, Isobutyl, sec.-Butyl, tert.-Butyl, geradkettiges oder verzweigtes Nonyl oder Dodecyl.

Die Verbindungen der allgemeinen Formel I, worin R₁ Wasserstoff, R₂ Cyclohexyl, Methyl oder tert.-Butyl und R₃ Cyclohexyl (= Verbindungen der Formel Ia) darstellen, sind neu. Daher stellen diese Verbindungen der allgemeinen Formel Ia ebenfalls einen Gegenstand der vorliegenden Erfindung dar. Ein Beispiel für Verbindungen der Formel Ia ist 3,5-Di-cyclohexyl-4-hydroxybenzylphosphonsäurediethylester.

Bevorzugt werden in dem erfindungsgemässen Verfahren Phenole der Formel II eingesetzt, worin R₁ Wasserstoff bedeutet.

Ebenfalls bevorzugt werden Phenole der Formel II eingesetzt, worin R₂ und R₃ unabhängig voneinander C₁-C₁₈-Alkyl, Cyclohexyl, Phenyl oder Benzyl, besonders bevorzugt jedoch C₁-C₄-Alkyl oder Cyclohexyl und speziell bevorzugt Methyl, tert.-Butyl oder Cyclohexyl bedeuten und R₂ zusätzlich Wasserstoff ist.

Von Interesse sind Phenole der Formel II worin sich die Reste R₂ und R₃ in ortho-Position zur phenolischen Hydroxygruppe befinden. Bevorzugt sind R₂ und R₃ von Wasserstoff verschieden.

Von speziellem Interesse sind Phenole der Formel II, worin R₂ und R₃ tert.-Butyl bedeuten. In den Verbindungen der Formel I steht die 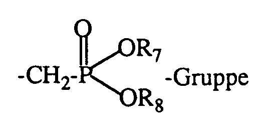
vorzugsweise in p-Stellung zur OH-Gruppe.

Als Formaldehyd in geeigneter Form werden in dem erfindungsgemässen Verfahren z.B. Formaldehyd in wässriger Lösung oder Paraformaldehyd, bevorzugt Paraformaldehyd eingesetzt.

Als Amine der Formel III werden im erfindungsgemässen Verfahren bevorzugt solche eingesetzt, worin R₄ Methyl, Ethyl, Propyl oder Butyl, R₅ Wasserstoff, Methyl, Ethyl, Propyl oder Butyl und R₆ Wasserstoff bedeuten.

Speziell bevorzugte Amine der Formel III, die eingesetzt werden, sind Dimethylamin, Diethylamin, Dipropylamin und Dibutylamin.

Bevorzugt werden im erfindungsgemässen Verfahren Phosphite der Formel IV eingesetzt, worin R₇, R₈ und R₉ unabhängig voneinander C₁-C₄-Alkyl, Phenyl oder C₇-C₉-Alkylphenyl, insbesondere Methyl, Ethyl oder Phenyl, darstellen.

Ebenfalls bevorzugt werden im erfindungsgemässen Verfahren Phosphite der Formel IV eingesetzt, worin R₇, R₈ und R₉ unabhängig voneinander C₁₈-Alkyl oder C₁₅-Alkylphenyl darstellen.

Ganz besonders bevorzugt werden im erfindungsgemässen Verfahren ein Phenol der Formel II, worin R₁ Wasserstoff in 3-Stellung, R₂ und R₃ tert.-Butyl in 2- und 6-Stellung sind, mit Paraformaldehyd, einem Amin der Formel III, worin R₄ und R₅ Methyl und R₆ Wasserstoff bedeuten, und einem Phosphit der Formel IV, worin R₇, R₈ und R₉ Ethyl bedeuten, in Gegenwart eines Lösungsmittels oder ohne Lösungsmittel, insbesondere ohne Lösungsmittel, umgesetzt.

Wird das erfindungsgemässe Verfahren in einem Lösungsmittel durchgeführt, kommen insbesondere unpolare aprotische Lösungsmittel wie etwa aromatische oder aliphatische Kohlenwasserstoffe, z.B. Toluol und Ligroin, polare protische Lösungsmittel wie etwa ein- oder mehrwertige Alkohole oder Ether, z.B. Methanol und Methylcellosolve, polare aprotische Lösungsmittel wie z.B. Dimethylformamid oder DMSO oder Gemische unpolarer aprotischer und polarer aprotischer Lösungsmittel in Frage.
Bevorzugt werden als Lösungsmittel polare aprotische Lösungsmittel, insbesondere Dimethylformamid, eingesetzt.

Speziell bevorzugt wird das erfindungsgemässe Verfahren ohne Lösungsmittel durchgeführt.

Die Reaktionstemperatur, bei der die Verbindungen der Formeln II, III und IV sowie Formaldehyd in geeigneter Form miteinander umgesetzt werden, hängt im einzelnen von diesen Verbindungen und davon ab, ob mit oder ohne Lösungsmittel gearbeitet wird. Das erfindungsgemässe Verfahren wird bei einer Temperatur von 0-200°C, bevorzugt bei 80-150°C und insbesondere bei 80-120⁰C, durchgeführt.

Die Reaktionszeiten können je nach spezifischem Phenol bzw. Phosphit beispielsweise zwischen 1 und 12 Stunden variieren.

Die Ausgangsstoffe der Formeln II und IV sowie die Formaldehydkomponente werden zweckmässig in etwa äquimolarer Menge umgesetzt.
Es können jedoch die Verbindung der Formel IV sowie die Formaldehydkomponente auch im Ueberschuss bis zu einem Verhältnis von Phenol:Formaldehyd:Phosphit von 1:3:4 eingesetzt werden. Bevorzugt wird ein Verhältnis von 1:1:1 bis 1:2:2.

Die eingesetzte Menge an Amin der Formel III beträgt im allgemeinen 1-250 Mol-% bezogen auf das Phenol der Formel II, bevorzugt 25-125 Mol-%, insbesondere jedoch 40-125 Mol-%.

Die Aufarbeitung des Reaktionsprodukts erfolgt in an sich bekannter Weise. Je nach dem eingesetzten System können z.B. folgende Aufarbeitungsmethoden angewendet werden:
- Abdestillieren der flüchtigen Komponenten inklusive des bei der Umsetzung entstehenden Wassers bei vermindertem Druck.
- Extraktion mit einem mit Wasser nicht mischbaren organischen Lösungsmittel wie z.B. Hexan, Heptan, Toluol, Essigsäureethylester oder Methylenchlorid, ein- oder mehrmaliges Waschen mit Wasser und anschliessendes Eindampfen der getrockneten, abgetrennten organischen Phase.

Je nach dem Produkt können weitere mögliche Nachreinigungsverfahren wie z.B. Umkristallisation oder chromatographische Verfahren angewendet werden.

Die nach dem erfindungsgemässen Verfahren hergestellten Verbindungen sind als Stabilisatoren für eine Vielzahl von organischen Monomeren und Polymeren gegen thermoxidativen und/oder photoinduzierten Abbau hervorragend geeignet, wie z.B. in US-A 3,280,070, US-A 3,281,505 und US-A 3,367,870 beschrieben.

Die nachstehenden Beispiele erläutern die vorliegende Erfindung weiter. Teile und Prozentangaben beziehen sich darin sowie in der übrigen Beschreibung auf das Gewicht, sofern nichts anderes angegeben ist.

### Beispiel 1: Herstellung von 3,5-Di-tert.-butyl-4-hydroxybenzylphosphonsäurediethylester in Lösung

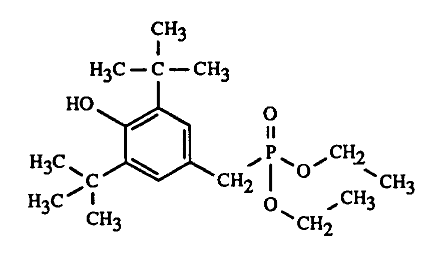

20,63 g (100 mmol) 2,6-Di-tert.-butylphenol, 5,22g (174 mmol) Paraformaldehyd, 6,1 g (45 mmol) 33 % ethanolisches Dimethylamin und 26 ml (= 24,7 g) N,N-Dimethylformamid werden in einem Sulfierkolben mit Rückflusskühler und mechanischem Rührer unter Stickstoff während 1 Stunde bei 50°C erwärmt. Darauf werden 33,23 g (200 mmol) Triethylphosphit zugegeben. Bei einer Reaktionstemperatur von 105°C wird 2 Stunden unter Rückfluss erhitzt: der Umsatz zum Endprodukt beträgt 82 % (HPLC). Aufarbeitung: Extraktion (Wasser/Methylcyclohexan) und Umkristallisation (Methylcyclohexan). Ausbeute: 23,0 g (65 %), Smp. 120°C, Reinheit (HPLC): 98 %.

| Mikroanalyse: | C | H | P |
|---|---|---|---|
| berechnet: | 64,02 | 9,33 | 8,69 % |
| gefunden: | 64,26 | 9,53 | 8,7 % |

### Beispiel 2:

Es wird wie in Beispiel 1 verfahren, wobei als Amin statt Dimethylamin 6,2 g (48 mmol) Dibutylamin und als Lösungsmittel 20 ml eines 1:1-Gemisches von DMF/Toluol eingesetzt wird; man erhält für dasselbe Produkt wie in Beispiel 1 einen Umsatz von 88 % (HPLC). Nach Aufarbeitung (Extraktion mit Wasser/Toluol und Umkristallisation aus Ligroin) werden 27,2 g (79 %) Produkt erhalten, Smp. 120°C, Reinheit (HPLC): 98 %.

### Beispiel 3: Herstellung von 3,5-Di-tert.-butyl-4-hydroxybenzylphosphonsäurediethylester (lösungsmittelfrei)

3,2 g HTMP (Hydroxymethylpiperidin), 52,3 g Paraformaldehyd und 206,3 g 2,6-Di-tert.-butylphenol werden inertisiert und bei 60°C unter reduziertem Druck in einem Doppelmantelkolben mit Untenauslauf, Rührstörer, Impellerrührer und Unterniveau-Schleuse für Gaseinleitung vorgelegt. Bei dieser Temperatur werden 52 g Dimethylamin-Gas eingeleitet und das Gemisch 1 Stunde bei 85°C gerührt. Danach erfolgt eine Zugabe von 332 g Triethylphosphit, wonach die Reaktionsmischung 4 Stunden bei 115°C gehalten wird. Aufarbeitung: Destillation unter vermindertem Druck von Triethylphosphit und Dimethylamin und Kristallisation des Rückstandes aus Ligroin ergeben 320g Produkt (90 %), Smp. 114°C.

### Beispiel 4: Herstellung von 3,5-Di-cyclohexyl-4-hydroxybenzylphosphonsäurediethylester

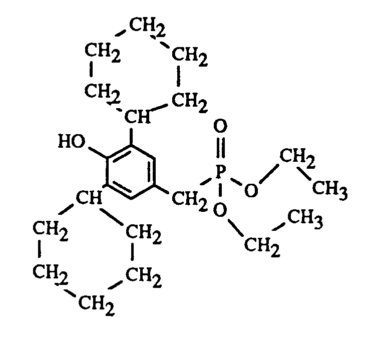

Es wird wie in Beispiel 1 verfahren, wobei als Phenol statt 2,6-Di-tert.-butylphenol 25,8 g 2,6-Dicyclohexylphenol verwendet wird; es wird ein Umsatz von 76 % (HPLC) erzielt. Nach Aufarbeitung (Extraktion mit Wasser/Methylcyclohexan und Umkristallisation aus Methylcyclohexan) werden 16,6 g (42%) Produkt erhalten, Smp. 120°C, Reinheit (HPLC): 96%.

| Mikroanalyse: | C | H | P |
|---|---|---|---|
| berechnet: | 67,62 | 9,13 | 7,58 % |
| gefunden: | 68,45 | 9,17 | 7,8 % |

### Beispiel 5: Herstellung von 3,5-Di-tert.-butyl-4-hydroxybenzylphosphonsäurediphenylester

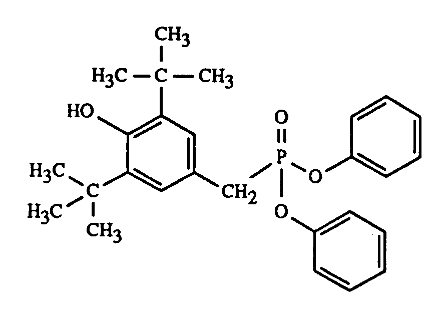

Es wird wie in Beispiel 1 verfahren, wobei auf das Lösungsmittel (Ethanol) verzichtet wird und anstatt Dimethylamin 8,1 g Dipropylamin sowie statt Triethylphosphit 55,9 g Triphenylphosphit verwendet wird; man erhält nach Aufarbeitung (Extraktion mit Wasser/Hexan und Umkristallisation aus Hexan) 24,3 g (54 %) Produkt, Smp. 130°C, Reinheit (HPLC): 98%.

| Mikroanalyse: | C | H | P |
|---|---|---|---|
| berechnet: | 71,66 | 7,35 | 6,84 % |
| gefunden: | 71,75 | 7,46 | 6,9 % |

### Beispiel 6: Herstellung von 3,5-Di-tert.-butyl-4-hydroxybenzylphosphonsäuredimethylester

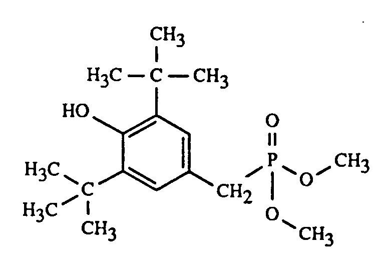

Es wird wie in Beispiel 5 verfahren, wobei Triphenylphosphit durch 22,3 g Trimethylphosphit ersetzt wird; man erhält nach Aufarbeitung (Extraktion mit Wasser/Methylcyclohexan und Umkristallisation aus Isopropanol) 19,2 g (59 %) Produkt, Smp. 155°C, Reinheit (HPLC): 85 %.

| Mikroanalyse: | C | H | P |
|---|---|---|---|
| berechnet: | 62,18 | 8,90 | 9,43 % |
| gefunden: | 61,57 | 8,81 | 9,4 % |

### Beispiel 7: Herstellung von 3,5-Di-methyl-4-hydroxybenzyl-phosphonsäurediethylester

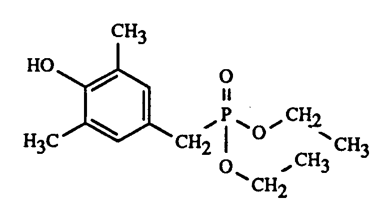

Es wird wie in Beispiel 1 verfahren, wobei aber das 2,6-Di-tert.-butylphenol durch 12,2 g 2,6-Dimethylphenol ersetzt wird; man erreicht einen Umsatz von 82 % (HPLC). Nach Aufarbeitung (Extraktion mit Wasser/Methylcyclohexan und Chromatographie über Kieselgel) werden 13,8 g (51 %) Produkt erhalten, Smp. 65°C, Reinheit (HPLC): 98 %.

| Mikroanalyse: | C | H | P |
|---|---|---|---|
| berechnet: | 57,35 | 7,77 | 11,38 % |
| gefunden: | 57,36 | 7,79 | 11,3 % |

### Beispiel 8: Herstellung von 2,6-Di-tert.-butyl-4-hydroxybenzylphosphonsäurediisopropylester

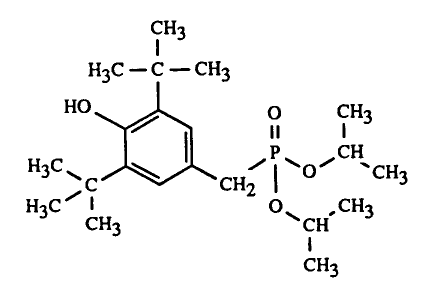

Es wird wie in Beispiel 5 verfahren, wobei das Triphenylphosphit durch 28,2 g Triisopropylphosphit ersetzt wird; man erreicht einen Umsatz von 95 % (HPLC). Nach Aufarbeitung (Extraktion mit Wasser/Hexan und Umkristallisation aus Hexan) werden 21,1 g (55 %) Produkt erhalten, Smp. 100°C, Reinheit (HPLC): 97 %.

| Mikroanalyse: | C | H | P |
|---|---|---|---|
| berechnet: | 65,60 | 9,70 | 8,06 % |
| gefunden: | 65,67 | 9,74 | 8,0 % |

### Beispiel 9: Herstellung von 2,6-Dicyclohexyl-4-hydroxybenzylphosphonsäurediisopropylester

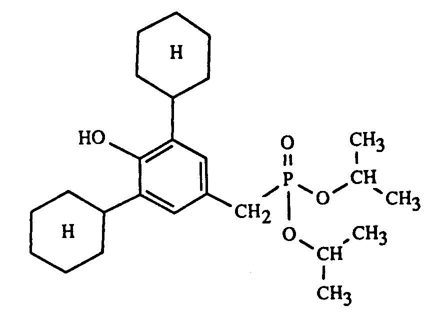

25,84 g (100 mmol) 2,6-Dicyclohexylphenol, 5,22 g (174 mmol) Paraformaldehyd, 8,1 g Dipropylamin und 50 g (240 mmol) Triisopropylphosphit werden analog Beispiel 1 verarbeitet; man erreicht einen Umsatz von 72 % (HPLC). Nach Aufarbeitung (Extraktion mit Wasser/Hexan und Umkristallisation aus Hexan) werden 13,7 g (31 %) Produkt erhalten, Smp. 143°C, Reinheit (HPLC): 96 %.

| Mikroanalyse: | C | H | P |
|---|---|---|---|
| berechnet: | 68,78 | 9,47 | 7,09 % |
| gefunden: | 69,09 | 9,54 | 7,1 % |

### Beispiel 10: Herstellung von 2,6-Dicyclohexyl-4-hydroxybenzylphosphonsäuredibutylester

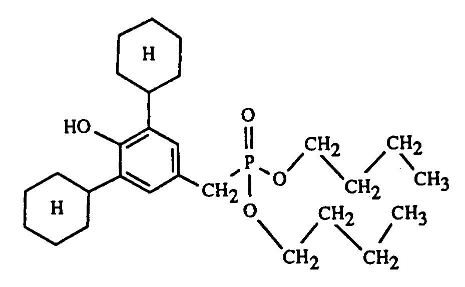

Es wird wie in Beispiel 9 Verfahren, wobei Triisopropylphosphit durch 46,3 g Tributylphosphit ersetzt wird. Nach Aufarbeitung (Extraktion mit Wasser, 2 N HCl/Hexan) werden 44 g (99 %) flüssiges Produkt erhalten, Reinheit (HPLC): 74 %.

### Beispiel 11: Herstellung von 2-Cyclohexyl-6-methyl-4-hydroxybenzylphosphonsäurediethylester

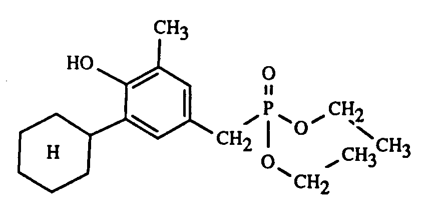

Es wird wie in Beispiel 1 verfahren, wobei aber das 2,6-Di-tert.-butylphenol durch 19,0 g 2-Cyclohexyl-6-methylphenol ersetzt wird; man erreicht einen Umsatz von 69 % (HPLC). Nach Aufarbeitung (Extraktion mit Wasser/Methylcyclohexan und Umkristallisation aus Methylcyclohexan) werden 7,0 g (20 %) Produkt erhalten, Smp. 73°C, Reinheit (HPLC): 96 %.

| Mikroanalyse: | C | H | P |
|---|---|---|---|
| berechnet: | 63,51 | 8,59 | 9,10 % |
| gefunden: | 63,86 | 8,71 | 9,0 % |

### Beispiel 12: Herstellung von 2,4-Di-tert.-butyl-4-hydroxybenzylphosphonsäurediisooctylester (Isomerengemisch)

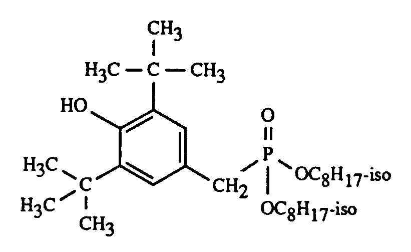

Es wird wie in Beispiel 5 verfahren, wobei das Triphenylphosphit durch 75,3 g Triisooctylphosphit (Isomerengemisch) ersetzt wird; man erhält nach Aufarbeitung (Extraktion mit Wasser/Essigsäureethylester und Chromatographie über Kieselgel) 12,8 g (64 %) Produkt, Reinheit (HPLC): 96 % Isomerengemisch.

| Mikroanalyse: | C | H | P |
|---|---|---|---|
| berechnet: | 70,95 | 10,95 | 5,90 % |
| gefunden: | 70,43 | 11,41 | 5,8 % |

### Beispiel 13: Herstellung von 2,4-Di-tert.-butyl-4-hydroxybenzylphosphonsäurediisodecylester (Isomerengemisch)

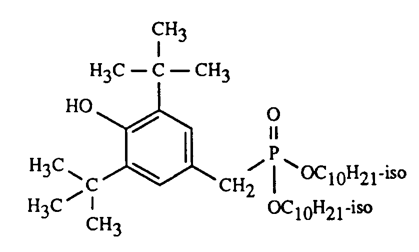

Es wird analog Beispiel 5 gearbeitet, wobei das Triphenylphosphit durch 59,3 g Triisodecylphosphit (Isomerengemisch) ersetzt wird; man erhält nach Aufarbeitung (Extraktion mit Wasser/Essigsäureethylester und Chromatographie über Kieselgel) 33,8 g (58 %) Produkt, Reinheit (HPLC): 96 % Isomerengemisch.

| Mikroanalyse: | C | H |
|---|---|---|
| berechnet: | 72,37 | 11,28 % |
| gefunden: | 72,10 | 11,7 % |

### Beispiel 14: Herstellung von 2,6-Di-tert.-butyl-4-hydroxybenzylphosphonsäuredidodecylester

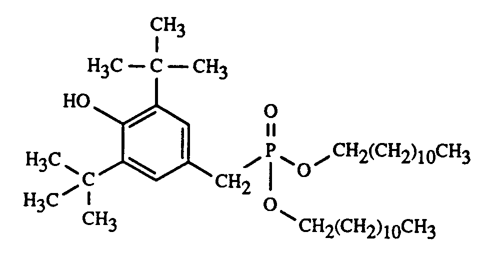

Es wird wie in Beispiel 5 verfahren, wobei das Triphenylphosphit durch 117,4 g Tridodecylphosphit ersetzt wird; man erhält nach Aufarbeitung (Extraktion mit Wasser/Essigsäureethylester und Chromatographie über Kieselgel) 46 g (72 %) Produkt, Reinheit (HPLC): ~75 %.

| Mikroanalyse: | C | H |
|---|---|---|
| berechnet: | 73,54 | 11,55 % |
| gefunden: | 74,27 | 12,6 % |

### Beispiel 15: Herstellung von 2,6-Di-tert.-butyl-4-hydroxybenzylphosphonsäuredioctadecylester

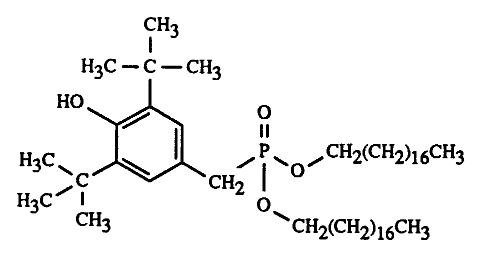

Es wird wie in Beispiel 5 verfahren, wobei das Triphenylphosphit durch 98,6 g Trioctadecylphosphit ersetzt wird; man erhält nach Aufarbeitung (Extraktion mit Wasser/Essigsäureethylester und Chromatographie über Kieselgel) 59 g (73 Produkt, Reinheit (HPLC): ~98 %.

| Mikroanalyse: | C | H |
|---|---|---|
| berechnet: | 76,07 | 12,14 % |
| gefunden: | 77,87 | 12,92 % |

## Patentansprüche

1. Verfahren zur Herstellung von Verbindungen der allgemeinen Formel I, 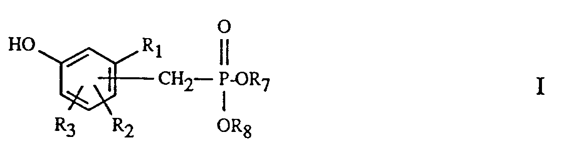 worin R₁ Wasserstoff oder Methyl, R₂ und R₃ unabhängig voneinander C₁-C₁₈-Alkyl, C₅-C₈-Cycloalkyl, Phenyl, C₇-C₉-Phenylalkyl oder Halogen sind, R₂ zusätzlich Wasserstoff ist und R₇ und R₈ unabhängig voneinander C₁-C₁₈-Alkyl, Phenyl oder C₇-C₁₈-Alkylphenyl bedeuten, dadurch gekennzeichnet, dass man in einem Einstufenverfahren ein Phenol der Formel II, 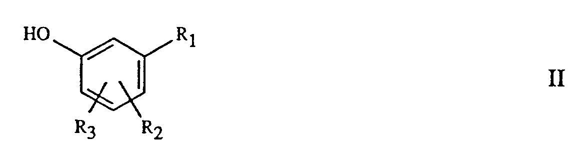 worin R₁ bis R₃ die vorstehend beschriebene Bedeutung haben, mit Formaldehyd oder Paraformaldehyd, einem Amin der Formel III
NR₄R₅R₆ III
worin R₄ C₁-C₄-Alkyl und R₅ und R₆ unabhängig voneinander Wasserstoff oder C₁-C₄-Alkyl bedeuten, und einem Phosphit der Formel IV, 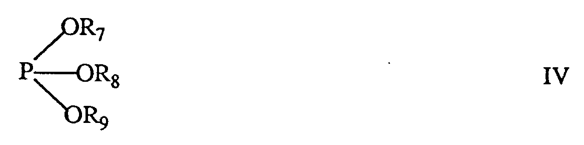 worin R₇ und R₈ die vorstehend beschriebene und R₉ die für R₇ und R₈ angegebene Bedeutung aufweisen,
bei einer Temperatur von 0-200°C umsetzt.

2. Verfahren gemäss Anspruch 1, dadurch gekennzeichnet, dass R₁ Wasserstoff bedeutet.

3. Verfahren gemäss Anspruch 1, dadurch gekennzeichnet, dass R₂ und R₃ unabhängig voneinander C₁-C₁₈-Alkyl, Cyclohexyl, Phenyl oder Benzyl bedeuten und R₂ zusätzlich Wasserstoff ist.

4. Verfahren gemäss Anspruch 1, dadurch gekennzeichnet, dass R₂ und R₃ sich in ortho-Position zur phenolischen Hydroxygruppe befinden.

5. Verfahren gemäss Anspruch 3, dadurch gekennzeichnet, dass R₂ und R₃ tert.-Butyl bedeuten.

6. Verfahren gemäss Anspruch 1, dadurch gekennzeichnet, dass die Umsetzung mit Paraformaldehyd erfolgt.

7. Verfahren gemäss Anspruch 1, dadurch gekennzeichnet, dass im Amin der Formel III R₄ Methyl, Ethyl, Propyl oder Butyl, R₅ Wasserstoff, Methyl, Ethyl, Propyl oder Butyl, und R₆ Wasserstoff bedeuten.

8. Verfahren gemäss Anspruch 1, dadurch gekennzeichnet, dass R₇, R₈ und R₉ unabhängig voneinander C₁-C₄-Alkyl, Phenyl oder C₇-C₉-alkylphenyl darstellen.

9. Verfahren gemäss Anspruch 1, dadurch gekennzeichnet, dass R₇, R₈ und R₉ unabhängig voneinander C₁₈-Alkyl oder C₁₅-Alkylphenyl darstellen.

10. Verfahren gemäss Anspruch 1, dadurch gekennzeichnet, dass man ein Phenol der Formel II, worin R₁ Wasserstoff in 3-Stellung, R₂ und R₃ tert.-Butyl in 2- und 6-Stellung sind, mit Paraformaldehyd, einem Amin der Formel III, worin R₄ und R₅ Methyl und R₆ Wasserstoff bedeuten, und einem Phosphit der Formel IV, worin R₇, R₈ und R₉ Ethyl bedeuten, umsetzt.

11. Verfahren gemäss Anspruch 1, dadurch gekennzeichnet, dass es in einem Lösungsmittel durchgeführt wird.

12. Verfahren gemäss Anspruch 11, dadurch gekennzeichnet, dass das Lösungsmittel polar aprotisch ist.

13. Verfahren gemäss Anspruch 1, dadurch gekennzeichnet, dass es ohne Lösungsmittel durchgeführt wird.

14. Verfahren gemäss Anspruch 1, dadurch gekennzeichnet, dass die Reaktionstemperatur 80-150°C beträgt.

15. Verfahren gemäss Anspruch 1, dadurch gekennzeichnet, dass das Verhältnis von Phenol der Formel II:Formaldehyd:Phosphit der Formel IV 1:1:1 bis 1:3:4 beträgt.

16. Verfahren gemäss Anspruch 1, dadurch gekennzeichnet, dass die Menge des eingesetzten Amins der Formel III 1-250 Mol-% bezogen auf das Phenol der Formel II beträgt.

17. Verbindungen der allgemeinen Formel Ia, 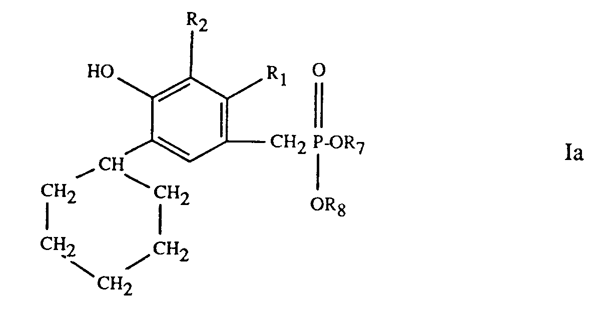 worin R₁ Wasserstoff, R₂ Methyl tert.-Butyl oder Cyclohexyl, sowie R₇ und R₈ unabhängig voneinander C₁-C₁₈-Alkyl, Phenyl oder C₇-C₁₈-Alkylphenyl bedeuten.

## Claims

1. A process for the preparation of a compound of the general formula I 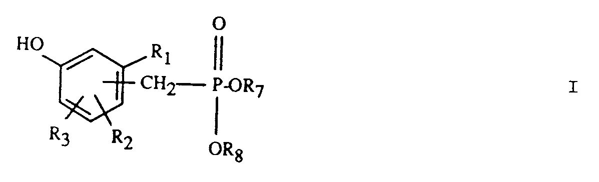 in which R₁ is hydrogen or methyl, R₂ and R₃ independently of one another are C₁-C₁₈alkyl, C₅-C₈cycloalkyl, phenyl, C₇-C₉phenylalkyl or halogen, R₂ is additionally hydrogen and R₇ and R₈ independently of one another are C₁-C₁₈alkyl, phenyl or C₇-C₁₈alkylphenyl, which comprises reacting, in a single-stage process, a phenol of the formula II 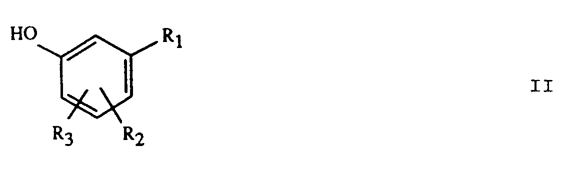 in which R₁ to R₃ have the meaning described above, with formaldehyde or paraformaldehyde, an amine of the formula III
NR₄R₅R₆ III
in which R₄ is C₁-c₄alkyl and R₅ and R₆ independently of one another are hydrogen or C₁-C₄alkyl, and a phosphite of the formula IV 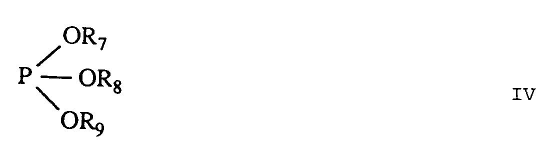 in which R₇ and R₈ have the meaning described above and R₉ has the meaning given for R₇ and R₈,
at a temperature of 0-200°C.

2. A process according to claim 1, wherein R₁ is hydrogen.

3. A process according to claim 1, wherein R₂ and R₃ independently of one another are C₁-C₁₈alkyl, cyclohexyl, phenyl or benzyl and R₂ is additionally hydrogen.

4. A process according to claim 1, wherein R₂ and R₃ are in the ortho-position to the phenolic hydroxyl group.

5. A process according to claim 3, wherein R₂ and R₃ are tert-butyl.

6. A process according to claim 1, wherein the reaction is carried out using paraformaldehyde.

7. A process according to claim 1, wherein in the amine of the formula III R₄ is methyl, ethyl, propyl or butyl, R₅ is hydrogen, methyl, ethyl, propyl or butyl, and R₆ is hydrogen.

8. A process according to claim 1, wherein R₇, R₈ and R₉ independently of one another are C₁-C₄alkyl, phenyl or C₇-C₉alkylphenyl.

9. A process according to claim 1, wherein R₇, R₈ and R₉ independently of one another are C₁₈alkyl or C₁₅alkylphenyl.

10. A process according to claim 1, wherein a phenol of the formula II in which R₁ is hydrogen in the 3-position and R₂ and R₃ are tert-butyl in the 2- and 6-position is reacted with paraformaldehyde, an amine of the formula III in which R₄ and R₅ are methyl and R₆ is hydrogen, and a phosphite of the formula IV in which R₇, R₈ and R₉ are ethyl.

11. A process according to claim 1, which is carried out in a solvent.

12. A process according to claim 11, wherein the solvent is a polar aprotic solvent.

13. A process according to claim 1, which is carried out without solvent.

14. A process according to claim 1, wherein the reaction temperature is 80-150°C.

15. A process according to claim 1, wherein the ratio of phenol of the formula II:formaldehyde : phosphite of the formula IV is 1:1:1 to 1:3:4.

16. A process according to claim 1, wherein the amount of amine of the formula III employed is 1-250 mol-% relative to the phenol of the formula II.

17. A compound of the general formula Ia 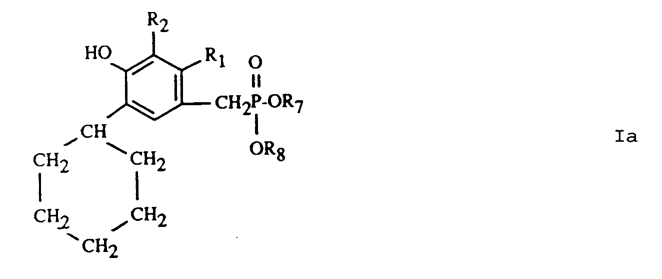 in which R₁ is hydrogen, R₂ is methyl, tert-butyl or cyclohexyl, and R₇ and R₈ independently of one another are C₁-C₁₈alkyl, phenyl or C₇-C₁₈alkylphenyl.

## Revendications

1. Procédé pour la préparation de composés de formule générale I : 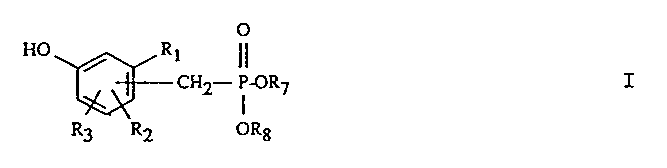 dans laquelle R₁ représente l'hydrogène ou le méthyle, R₂ et R₃ indépendamment l'un de l'autre représentent un alkyle en C₁-C₁₈, un cycloalkyle en C₅-C₈, un phényle, un phénylalkyle en C₇-C₉ ou un halogène, R₂ de plus est l'hydrogène et R₇ et R₈ indépendamment l'un de l'autre représentent un alkyle en C₁-C₁₈, un phényle ou un alkylphényle en C₇-C₁₈, caractérisé en ce qu'on fait réagir selon un procédé en une étape un phénol de formule II : 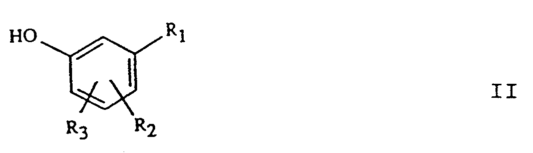 dans laquelle R₁ à R₃ ont la signification décrite ci-dessus, avec le formaldéhyde ou le paraformaldéhyde, une amine de formule III :
NR₄R₅R₆ III
dans laquelle R₄ représente un alkyle en C₁-C₄ et R₅ et R₆ indépendamment l'un de l'autre représentent l'hydrogène ou un alkyle en C₁-C₄, et avec un phosphite de formule IV : 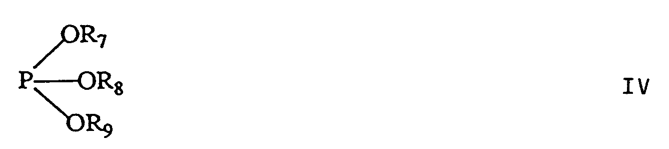 dans laquelle R₇ et R₈ ont les significations données ci-dessus et R₉ a la signification donnée pour R₇ et R₈, à une température de 0 à 200°C.

2. Procédé selon la revendication 1, caractérisé en ce que R₁ représente l'hydrogène.

3. Procédé selon la revendication 1, caractérisé en ce que R₂ et R₃ indépendamment l'un de l'autre représentent un alkyle en C₁-C₁₈, le cyclohexyle, le phényle ou le benzyle et R₂ représente de plus l'hydrogène.

4. Procédé selon la revendication 1, caractérisé en ce que R₂ et R₃ sont en position ortho par rapport au groupe hydroxy du phénol.

5. Procédé selon la revendication 3, caractérisé en ce que R₂ et R₃ représentent le tert.-butyle.

6. Procédé selon la revendication 1, caractérisé en ce que la réaction est effectuée avec le paraformaldéhyde.

7. Procédé selon la revendication 1, caractérisé en ce que dans l'amine de formule III R₄ représente le méthyle, l'éthyle, le propyle ou le butyle, R₅ l'hydrogène, le méthyle, l'éthyle, le propyle ou le butyle et R₆ représente l'hydrogène.

8. Procédé selon la revendication 1, caractérisé en ce que R₇, R₈ et R₉ indépendamment l'un de l'autre représentent un alkyle en C₁-C₄, un phényle ou un alkylphényle en C₇-C₉.

9. Procédé selon la revendication 1, caractérisé en ce que R₇, R₈ et R₉ indépendamment l'un de l'autre représentent un alkyle en C₁₈ ou un alkylphényle en C₁₅.

10. Procédé selon la revendication 1, caractérisé en ce qu'on fait réagir un phénol de formule II dans laquelle R₁ représente l'hydrogène en position 3, R₂ et R₃ représentent le tert.-butyle en positions 2 et 6, avec le paraformaldéhyde, une amine de formule III dans laquelle R₄ et R₅ représentent le méthyle et R₆ représente l'hydrogène, et un phosphite de formule IV dans laquelle R₇, R₈ et R₉ représentent l'éthyle.

11. Procédé selon la revendication 1, caractérisé en ce qu'on le met en oeuvre dans un solvant.

12. Procédé selon la revendication 11, caractérisé en ce que le solvant est aprotique polaire.

13. Procédé selon la revendication 1, caractérisé en ce qu'on le met en oeuvre sans solvant.

14. Procédé selon la revendication 1, caractérisé en ce que la température de réaction est de 80 à 150°C.

15. Procédé selon la revendication 1, caractérisé en ce que le rapport du phénol de formule II:formaldéhyde:phosphite de formule IV est de 1:1:1 à 1:3:4.

16. Procédé selon la revendication 1, caractérisé en ce que la quantité de l'amine de formule III utilisée est de 1 à 250 % en moles par rapport au phénol de formule II.

17. composés de formule générale Ia : 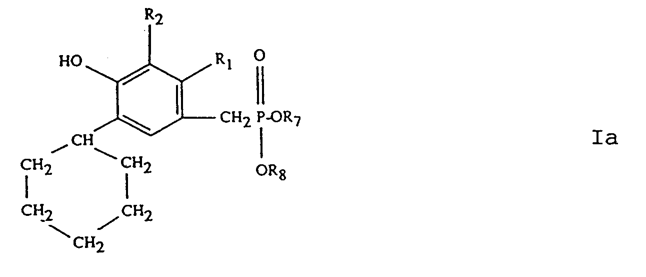 dans laquelle R₁ représente l'hydrogène, R₂ le méthyle, le tert.-butyle ou le cyclohexyle, ainsi que R₇ et R₈ indépendamment l'un de l'autre un alkyle en C₁-C₁₈, un phényle ou un alkylphényle en C₇-C₁₈.
